# EUROPÄISCHE PATENTANMELDUNG

(11) **EP 4 270 261 A1**
(43) Veröffentlichungstag der Anmeldung: **01.11.2023**
(21) Anmeldenummer: 22189043.7
(22) Anmeldetag: 05.08.2022
(51) Int. Cl.: G06N 10/60, G06N 10/70

(54) **VERFAHREN ZUR LÖSUNG EINES QUANTENRECHNER-PROBLEMS UND QUANTENRECHNER MIT EINEM KONFIGURIERBAREN QUANTENSCHALTKREIS**

(30) Priorität: 29.04.2022 DE 102022204264
(71) Anmelder: Siemens Aktiengesellschaft, 80333 München (DE)
(72) Erfinder: Mauerer, Wolfgang, 93093 Donaustauf (DE); Niedermeier, Christoph, 80999 München (DE); Wintersperger, Karen, 80804 München (DE); von Sicard, Oliver, 81541 München (DE)
(74) Vertreter: Siemens Patent Attorneys

(57) **Zusammenfassung**

Bei dem Verfahren zum Lösen eines Quantenrechner-Problems wird ein konfigurierbarer Quantenschaltkreis (QC) mit einer Anordnung von Qubits herangezogen und es wird ein Quantenrechner-Problem (QCPROB) entgegengenommen, wobei abhängig von dem entgegengenommenen Quantenrechner-Problem ein Lösungsalgorithmus bestimmt wird und abhängig von dem Lösungsalgorithmus und einer Fehleranfälligkeit des Lösungsalgorithmus eine solche Konfiguration des Quantenschaltkreises ermittelt wird, die Qubits zur Fehlerkorrektur abhängig von der Fehleranfälligkeit des Lösungsalgorithmus aufweist, und wobei der konfigurierbare Quantenschaltkreis (QC) mit der ermittelten Konfiguration konfiguriert und mittels der konfigurierten Quantenschaltkreises (QC) das Quantenrechner-Problem gelöst (SOL) wird.

## Beschreibung

Die Erfindung betrifft ein Verfahren zur Lösung eines Quantenrechner-Problems mit einem Quantenschaltkreis mit einer Anordnung von Qubits sowie einen Quantenrechner mit einem konfigurierbaren Quantenschaltkreis mit einer Anordnung von Qubits.

Bei jedem Vorgang in der elektronischen Datenverarbeitung besteht die Möglichkeit von Fehlern in Form von ungewollten Veränderungen von Bits. Die Ursachen dafür sind bei klassischen Computern beispielsweise externe Einflüsse, etwa kosmische Strahlung oder Radioaktivität oder Sonneneruptionen oder Rauscheffekte bei Rechenoperationen oder bei der Datenübertragung. Bei klassischen Rechnern sind klassische Bits jedoch fehlertolerant, da die Zustände "0" und "1" oder "low" und "high" einen ausreichend großen Spannungsbereich abdecken und eine verglichen mit diesem Spannungsbereich geringe Spannungsabweichung im Signal daher einen geringen Einfluss auf den ausgelesenen Wert eines klassischen Bits hat.

Bei Quantencomputern, auch als Quantenrechner bezeichnet, werden anstelle von Rechenoperationen auf klassischen Bits in an sich bekannter Weise Quantenrechenoperationen auf Qubits ausgeführt. Solche Quantenrechenoperationen sind insbesondere Gatteroperationen wie etwa NOT oder CNOT und nach heutigem Stand stark fehleranfällig, da sich die Energieniveaus für verschiedene Quantenzustände von Qubits kaum voneinander unterscheiden. Einwirkungen von außen, etwa durch Temperatur infolge eines elektrischen Signals, oder auch interne Einflüsse, etwa unerwünschte Kopplungen zwischen benachbarten Qubits oder fehlerhafte Quantengatter, können Bit-Flips oder Phase-Flips, d. h. Änderung der Phasenverschiebung, oder Kombinationen daraus bewirken. Aus diesem Grund müssen heutige Quantencomputer stark abgeschirmt und bei tiefen Temperaturen von wenigen Millikelvin betrieben werden.

Eine erfolgreiche Weiterrechnung mit fehlerhaften Qubits in einem Quantenschaltkreis ist abhängig vom Grad der Fehlertoleranz des verwendeten Algorithmus schwierig bis unmöglich.

Klassische Fehlerkorrekturalgorithmen und Fehlerdetektionsalgorithmen nutzen meist Redundanzen in den Daten, etwa Parity-Bits oder eine Vervielfachung von Bits, sodass die Mehrzahl dieser vervielfachten Bits mutmaßlich den vorgesehenen Wert der jeweiligen vervielfachten Bits angibt. Solche Fehlerkorrekturalgorithmen und Fehlerdetektionsalgorithmen sind jedoch bei Quantencomputern nicht möglich, da aufgrund des No-Cloning-Theorems eine Vervielfachung von Zuständen von Qubits nicht möglich ist.

Dennoch ist auch bei Quantencomputern eine Fehlerkorrektur möglich. Dazu sind je logischem Qubit allerdings bis zu 1000 physische Qubits erforderlich, um für tatsächliche Anwendungsfälle das logische Qubit realisieren zu können.

Selbst bei besonders effizienten Quantenalgorithmen erfordert eine Fehlerkorrektur eine Anzahl von zusätzlich vorzusehenden Qubits, die die Anzahl der logischen Qubits deutlich übersteigt.

Aktuelle Quantencomputer weisen eine sehr begrenzte Anzahl von Qubits auf. Folglich lassen sich aktuelle Quantencomputer-Probleme nicht adäquat auf solchen Quantencomputern lösen, da nur wenige logische Qubits auf solchen Quantencomputern zur Verfügung stehen.

Es ist daher Aufgabe der Erfindung, ein Verfahren zur Lösung eines Quantenrechner-Problems mit einem Quantenschaltkreis sowie einen Quantenrechner mit einem Quantenschaltkreis anzugeben.

Diese Aufgabe der Erfindung wird mit einem Verfahren zur Lösung eines Quantenrechner-Problems mit einem Quantenschaltkreis mit den in Anspruch 1 angegebenen Merkmalen sowie mit einem Quantenrechner mit einem Quantenschaltkreis mit den in Anspruch 8 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Lösen eines Quantenrechner-Problems wird ein konfigurierbarer Quantenschaltkreis mit einer Anordnung von Qubits herangezogen und es wird ein Quantenrechner-Problem entgegengenommen, wobei abhängig von dem entgegengenommenen Quantenrechner-Problem ein Lösungsalgorithmus bestimmt wird und abhängig von dem Lösungsalgorithmus und einer Fehleranfälligkeit des Lösungsalgorithmus eine solche Konfiguration der Qubits ermittelt wird, die eine von der Fehleranfälligkeit des Lösungsalgorithmus abhängige Anzahl von Qubits zur Fehlerkorrektur aufweist. Bei dem erfindungsgemäßen Verfahren wird der konfigurierbare Quantenschaltkreis mit der ermittelten Konfiguration konfiguriert und mittels des konfigurierten Quantenschaltkreises das Quantenrechner-Problem gelöst.

Bei dem erfindungsgemäßen Verfahren wird vorteilhaft abhängig von dem Lösungsalgorithmus und abhängig von der Fehleranfälligkeit des Lösungsalgorithmus eine solche Konfiguration der Qubits ermittelt, die eine von der Fehleranfälligkeit des Lösungsalgorithmus abhängige Anzahl von Qubits zur Fehlerkorrektur aufweist. Mittels dieser Abhängigkeit von der Fehleranfälligkeit des Lösungsalgorithmus kann für den ermittelten Lösungsalgorithmus des jeweiligen Quantenrechner-Problems die zur Fehlerkorrektur erforderliche Anzahl an Qubits vorgesehen werden. Diese vorgesehene Anzahl von Qubits zur Fehlerkorrektur ist also vom Lösungsalgorithmus und somit vom jeweiligen Quantenrechner-Problem abhängig. Es kann folglich abhängig vom Quantenrechner-Problem eine für die Fehlerkorrektur erforderliche Anzahl an Qubits vorgesehen werden. Folglich müssen nur so viele Qubits zur Fehlerkorrektur vorgesehen werden, wie es die Fehleranfälligkeit des Lösungsalgorithmus erfordert. Es muss demnach keine vorab festgelegte und vom konkreten Quantenrechner-Problem unabhängige Anzahl von Qubits zur Fehlerkorrektur vorgesehen sein. Das erfindungsgemäße Verfahren erlaubt folglich die zur Fehlerkorrektur erforderliche Anzahl an Qubits zur Umsetzung des Lösungsalgorithmus so gering wie nötig zu wählen. Folglich können mittels des erfindungsgemäßen Verfahrens mit dem Quantenschaltkreis mit einer vorgegebenen Anzahl von Qubits komplexere Quantenrechner-Probleme gelöst werden als bislang bekannt. Es können also besonders viele der Qubits des Quantenschaltkreises als logische Qubits verwendet werden, da diese nicht notwendig zur Fehlerkorrektur zur Verfügung stehen müssen.

Bei dem erfindungsgemäßen Verfahren wird bevorzugt die Fehleranfälligkeit des Lösungsalgorithmus gegenüber Fehlern einzelner Schritte des Lösungsalgorithmus bestimmt und die Konfiguration der Qubits abhängig von der Fehleranfälligkeit des Lösungsalgorithmus gegenüber den Fehlern der einzelnen Schritte bestimmt. Somit kann die von der Fehleranfälligkeit des Lösungsalgorithmus abhängende Anzahl von Qubits zur Fehlerkorrektur spezifisch auf die Fehleranfälligkeit des Lösungsalgorithmus gegenüber Fehlern einzelner Schritte des Lösungsalgorithmus abgestellt werden. Vorzugsweise wird die Anzahl von Qubits zur Fehlerkorrektur für einzelne Schritte des Lösungsalgorithmus unterschiedlich gewichtet und an die Fehleranfälligkeit des Lösungsalgorithmus gegenüber Fehlern dieser einzelnen Schritte angepasst. Insbesondere wird für konkrete einzelne Schritte des Lösungsalgorithmus eine andere Anzahl von Qubits zur Fehlerkorrektur vorgesehen als für andere einzelne Schritte.

Vorzugsweise weist in einer Weiterbildung des erfindungsgemäßen Verfahrens die Konfiguration für unterschiedliche logische Qubits zur Umsetzung des Lösungsalgorithmus unterschiedlich viele physische Qubits auf. In dieser Weiterbildung werden vorteilhaft abhängig von der Relevanz von auftretenden Fehlern für einzelne logische Qubits bedarfsangepasst physische Qubits vorgesehen. So ist bei einzelnen logischen Qubits eine Fehlerkorrektur entscheidend für die Lösung des Quantenrechner-Problems und bei anderen logischen Qubits eine Fehlerkorrektur entbehrlich. Diesem Umstand wird in dieser Weiterbildung vorteilhaft Rechnung getragen.

Zweckmäßig wird bei dem Verfahren gemäß der Erfindung eine solche Konfiguration ermittelt, welche die verfügbare Menge an Qubits des Quantenschaltkreises ausschöpft. Auf diese Weise lässt sich die Konfiguration derart wählen, dass so viele logische Qubits wie möglich mit dem Quantenschaltkreis realisiert werden können. Folglich kann der Quantenschaltkreis derart konfiguriert werden, dass ein möglichst komplexes Quantenrechner-Problem mit dem Quantenschaltkreis gelöst werden kann.

Vorteilhaft wird bei dem erfindungsgemäßen Verfahren ein Maß für die Fehlerfreiheit einer mit dem Lösungsalgorithmus ermittelten Lösung vorgegeben und eine solche Konfiguration ermittelt, die das Maß für die Fehlerfreiheit der Lösung berücksichtigt oder erfüllt. In dieser Weiterbildung der Erfindung kann das Maß für die Fehlerfreiheit der Lösung des Quantenrechner-Problems zur Ermittlung der Anzahl von Qubits zur Fehlerkorrektur herangezogen werden. Insbesondere in Fällen, in denen lediglich eine geringe Fehlerfreiheit einer mit dem Lösungsalgorithmus ermittelten Lösung vorgegeben ist, kann die Anzahl von Qubits zur Fehlerkorrektur geringer angesetzt werden als in Fällen, in denen eine höhere Fehlerfreiheit vorgegeben ist.

In einer vorteilhaften Weiterbildung des erfindungsgemäßen Verfahrens wird ein Maß für die Komplexität des Quantenrechner-Problems vorgegeben und die Konfiguration abhängig von dem Maß für die Komplexität ermittelt. In dieser Weiterbildung der Erfindung kann eine für ein reales Problem erforderliche Komplexität des Quantenrechnerproblems als Randbedingung vorgegeben werden und abhängig von dieser Randbedingung jeweils die Anzahl von Qubits zur Fehlerkorrektur ermittelt werden. In dieser Weiterbildung der Erfindung kann folglich das Maß an logischen Qubits für die Umsetzung des Lösungsalgorithmus vorgegeben sein und die Fehlerfreiheit einer mit dem Lösungsalgorithmus ermittelten Lösung optimiert, d. h. möglichst hoch gewählt, werden.

Der erfindungsgemäße Quantenrechner weist einen konfigurierbaren Quantenschaltkreis mit einer Anordnung von Qubits auf, wobei der Quantenrechner eine Schnittstelle zum Entgegennehmen eines Quantenrechner-Problems aufweist und wobei der Quantenrechner zur Konfiguration der konfigurierbaren Anordnung von Qubits eine, vorzugsweise klassische, Recheneinrichtung aufweist, welche eingerichtet ist, abhängig von dem entgegengenommenen Quantenrechner-Problem einen Lösungsalgorithmus zu bestimmen und abhängig von dem Lösungsalgorithmus und einer Fehleranfälligkeit des Lösungsalgorithmus eine solche Konfiguration des konfigurierbaren Quantenschaltkreises zu ermitteln, welche eine Anzahl von Qubits zur Fehlerkorrektur abhängig von der Fehleranfälligkeit des Lösungsalgorithmus aufweist, wobei der Quantenrechner eingerichtet ist, den Quantenschaltkreis gemäß der ermittelten Konfiguration zu konfigurieren. Besonders bevorzugt ist der erfindungsgemäße Quantenrechner eingerichtet und ausgebildet, ein erfindungsgemäßes Verfahren wie es oben beschrieben ist auszuführen.

Der erfindungsgemäße Quantenrechner ist in einer bevorzugten Weiterbildung der Erfindung einteilig, d. h. als ein integriertes einziges Bauteil, ausgebildet. Alternativ und ebenfalls bevorzugt ist bildet der erfindungsgemäße Quantenrechner ein mehrteiliges System aus, welches zumindest den Quantenschaltkreis und die Recheneinrichtung umfasst, die separate und miteinander in Kommunikationsverbindung stehende Bauteile bilden.

Mittels des erfindungsgemäßen Quantenrechners lässt sich das erfindungsgemäße Verfahren ausführen. Es ergeben sich für den erfindungsgemäßen Quantenrechner dieselben Vorteile wie bereits zum erfindungsgemäßen Verfahren erläutert. Die vorteilhaften Weiterbildungen des erfindungsgemäßen Verfahrens, wie sie oben beschrieben sind, werden bevorzugt beim erfindungsgemäßen Quantenrechner sinngemäß umgesetzt, d. h. der erfindungsgemäße Quantenrechner ist geeigneterweise für die jeweiligen Weiterbildungen des erfindungsgemäßen Verfahrens eigens ausgebildet und eingerichtet.

Bevorzugt ist bei dem erfindungsgemäßen Verfahren oder bei dem erfindungsgemäßen Quantenrechner das Quantenrechner-Problem ein Fertigungsproblem und/oder ein Wartungsproblem und/oder ein Logistikproblem und/oder ein medizinisches Bilderkennungsproblem. Gerade in den Anwendungsfällen der digitalen Fertigung und der Wartung und der Logistik stellen sich regelmäßig komplexe Probleme, die mittels Quantenrechnern und Verfahren zum Lösen eines Quantenrechner-Problems gelöst werden können. Gerade in diesen Anwendungsfällen ist daher der Einsatz des erfindungsgemäßen Verfahrens und/oder des erfindungsgemäßen Quantenrechners besonders vorteilhaft.

Nachfolgend wird die Erfindung anhand eines in der Zeichnung dargestellten Ausführungsbeispiels näher erläutert. Die einzige Zeichnungsfigur 1 zeigt den Ablauf eines erfindungsgemäßen Verfahrens zur Lösung eines Quantenrechner-Problems mittels eines erfindungsgemäßen Quantenrechners mit einem konfigurierbaren Quantenschaltkreis schematisch in einem Ablaufdiagramm.

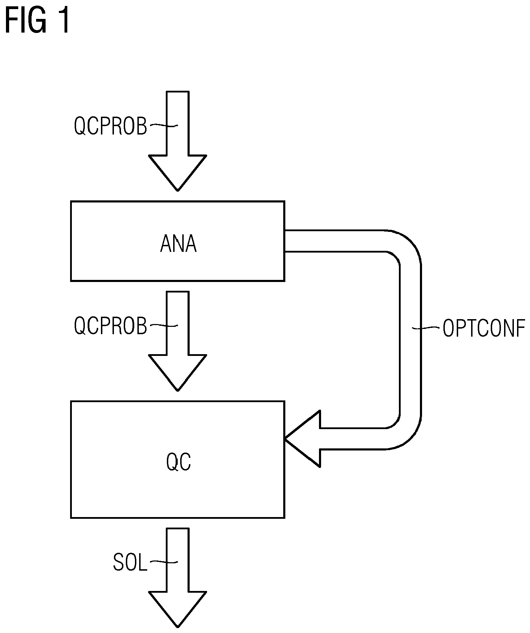

Das in Fig. 1 dargestellte Ablaufdiagramm zeigt den Ablauf eines erfindungsgemäßen Verfahrens zur Lösung eines Quantenrechner-Problems QCPROB in Gestalt einer digitalen Fertigungsaufgabe auf einem erfindungsgemäßen Quantenrechner. Die digitale Fertigungsaufgabe betrifft eine effiziente Planung eines Produktionsprozesses unter vorgegebenen Randbedingungen. In anderen Ausführungsbeispielen ist das Quantenrechner-Problem QCPROB ein anderes Problem, etwa ein Wartungsproblem oder ein Logistikproblem oder ein medizinisches Bilderkennungsproblem. Für dieses Quantenrechner-Problem QCPROB sind eine Reihe von Quantenalgorithmen zur Ausführung auf einem Quantencomputer bekannt. Das Quantenrechner-Problem QCPROB wird dem erfindungsgemäßen Quantenrechner mittels einer Schnittstelle des Quantenrechners übergeben.

Mittels des erfindungsgemäßen Verfahrens wird in einem ersten Schritt von einem klassischen Analyserechner ANA des Quantenrechners das Quantenrechner-Problem QCPROB entgegengenommen und ein Quantenalgorithmus mit einer möglichst geringen Anzahl an erforderlichen logischen Qubits zur Lösung des Quantenrechner-Problems QCPROB ausgewählt. Dazu weist der Analyserechner ANA einen entsprechend programmierten klassischen Recheneinrichtung mit einer Datenbank von bekannten Quantenalgorithmen auf. Der ausgewählte Quantenalgorithmus wird in den abschließenden Schritten des Verfahrens auf dem konfigurierbaren Quantenschaltkreis QC des Quantenrechners implementiert und gelöst.

Dazu wird bei dem Verfahren zunächst eine logische Idealkonfiguration an Qubits vorgesehen, welche im Falle fehlerfreier Qubits das Quantenrechner-Problem QCPROB lösen würde, indem die Idealkonfiguration den ausgewählten Quantenalgorithmus umsetzt. Diese logische Idealkonfiguration von Qubits unterschätzt jedoch die Anzahl der tatsächlich erforderlichen Qubits. Denn für eine realistische Implementierung ist eine Vielzahl von Fehlerkorrektur-Qubits erforderlich, die die Anzahl von Qubits für die Idealkonfiguration in der Regel deutlich übersteigt, je nach tatsächlicher Realisation der Qubits beispielsweise um mehrere Größenordnungen.

Es wird nun mittels des Analyserechners ANA ein Optimierungsalgorithmus angewandt, der einen für eine erforderliche zuverlässige Lösung des Quantenrechner-Problems QCPROB erforderlichen Anteil von Fehlerkorrektur-Qubits berechnet. Dazu wird zunächst die Idealkonfiguration von Qubits herangezogen und es wird eine Gewichtung der Qubits der Idealkonfiguration unternommen, d. h. es wird ermittelt, für welche Qubits eine Fehlerkorrektur entscheidend ist und für welche Qubits eine Fehlerkorrektur entbehrlich ist. Somit kann ein gewisser Anteil von Fehlerkorrektur-Qubits bestimmt werden, der für eine reale Implementierung der Idealkonfiguration von Qubits tatsächlich erforderlich ist. Es können also die für die Idealkonfiguration vorgesehenen Qubits und die Fehlerkorrektur-Qubits im entsprechenden Verhältnis für die Konfiguration des Quantenschaltkreises QC vorgesehen werden. Insbesondere kann auf diese Weise bestimmt werden, wie viele Qubits bei dem konfigurierbaren Quantenschaltkreis QC überhaupt zur Verfügung stehen und es kann folglich entsprechend dem Verhältnis von Qubits für die Idealkonfiguration und Fehlerkorrektur-Qubits die Komplexität der Idealkonfiguration passend gewählt werden, sodass eine größtmögliche Zahl von Qubits für die Idealkonfiguration zur Verfügung steht und eine ausreichend hohe Anzahl von Fehlerkorrektur-Qubits vorgesehen ist.

Entsprechend der zuvor unternommenen Gewichtung wird bei dem konfigurierbaren Quantenschaltkreises QC die Konfiguration umfassend die Idealkonfiguration sowie den bestimmten Anteil von Fehlerkorrektur-Qubits mittels eines Konfigurierschritts OPTCONF konfiguriert. Dazu gibt der Analyserechner ANA die Konfiguration mittels einer Ausgabeschnittstelle aus und übergibt die Konfiguration an den Quantenschaltkreis. Der Quantenrechner ist eingerichtet, den Quantenschaltkreis mittels der an den Quantenschaltkreis übergebenen Konfiguration zu konfigurieren. Anschließend wird mit dem konfigurierten Quantenschaltkreis QC das Quantenrechner-Problem QCPROB in einem Lösungsschritt SOL gelöst.

In einem weiteren, nicht eigens dargestellten Ausführungsbeispiel werden mehrere Idealkonfigurationen für Lösungen des Quantenrechner-Problems QCPROB herangezogen, wobei jede der Idealkonfigurationen eine Konfiguration zur Lösung des Quantenrechner-Problems QCPROB unter der Annahme nicht fehlerbehafteter Qubits ist. Dabei unterscheiden sich die mehreren Idealkonfigurationen in der Komplexität des Quantenrechner-Problems QCPROB, welches die Idealkonfigurationen jeweils lösen können. Es werden zu jeder der Idealkonfigurationen die erforderlichen Fehlerkorrektur-Qubits ermittelt und es wird die Gesamtzahl der zur Realisierung der Idealkonfiguration und der Realisierung der Fehlerkorrektur-Qubits erforderlichen Qubits ermittelt, sodass mehrere Konfigurationskandidaten zur Konfiguration des konfigurierbaren Quantenschaltkreises QC zur Verfügung stehen. Es wird dann derjenige Konfigurationskandidat herangezogen, welcher die zur Verfügung stehenden Qubits des Quantenschaltkreises QC größtmöglich ausschöpft, und mit diesem Konfigurationskandidaten der konfigurierbare Quantenschaltkreis QC konfiguriert. In diesem Ausführungsbeispiel wird dann mit dem derart konfigurierten Quantenschaltkreis QC das Quantenrechner-Problem QCPROB gelöst.

## Patentansprüche

1. Verfahren zum Lösen eines Quantenrechner-Problems, bei welchem ein konfigurierbarer Quantenschaltkreis (QC) mit einer Anordnung von Qubits herangezogen und ein Quantenrechner-Problem (QCPROB) entgegengenommen wird, wobei abhängig von dem entgegengenommenen Quantenrechner-Problem ein Lösungsalgorithmus bestimmt wird und abhängig von dem Lösungsalgorithmus und einer Fehleranfälligkeit des Lösungsalgorithmus eine solche Konfiguration der Qubits ermittelt wird, die eine Anzahl von Qubits zur Fehlerkorrektur abhängig von der Fehleranfälligkeit des Lösungsalgorithmus aufweist, und wobei der konfigurierbare Quantenschaltkreis (QC) mit der ermittelten Konfiguration konfiguriert wird und mittels des konfigurierten Quantenschaltkreises (QC) das Quantenrechner-Problem gelöst (SOL) wird.

2. Verfahren nach dem vorhergehenden Anspruch, bei welchem eine Fehleranfälligkeit des Lösungsalgorithmus gegenüber Fehlern einzelner Schritte des Lösungsalgorithmus bestimmt wird und die Konfiguration der Qubits abhängig von der Fehleranfälligkeit des Lösungsalgorithmus gegenüber den Fehlern der einzelnen Schritte bestimmt wird.

3. Verfahren nach einem der vorhergehenden Ansprüche, bei welchem die Konfiguration für unterschiedliche logische Qubits zur Umsetzung des Lösungsalgorithmus unterschiedlich viele physische Qubits aufweist.

4. Verfahren nach einem der vorhergehenden Ansprüche, bei welchem eine solche Konfiguration ermittelt wird, welche eine verfügbare Menge an Qubits des Quantenschaltkreises (QC) ausschöpft.

5. Verfahren nach einem der vorhergehenden Ansprüche, bei welchem ein Maß für eine Fehlerfreiheit der Lösung vorgegeben wird und eine solche Konfiguration ermittelt wird, die das Maß für die Fehlerfreiheit der Lösung berücksichtigt oder erfüllt.

6. Verfahren nach einem der vorhergehenden Ansprüche, bei welchem ein Maß für die Komplexität des Quantenrechner-Problems vorgegeben wird und die Konfiguration abhängig von dem Maß für die Komplexität ermittelt wird.

7. Quantenrechner mit einem konfigurierbaren Quantenschaltkreis mit einer Anordnung von Qubits, wobei der Quantenrechner eine Schnittstelle zum Entgegennehmen eines Quantenrechner-Problems (QCPROB) aufweist und wobei der Quantenrechner (QC) zur Konfiguration des Quantenschaltkreises eine Recheneinrichtung aufweist, welche eingerichtet ist, abhängig von dem entgegengenommenen Quantenrechner-Problem (QCPROB) einen Lösungsalgorithmus zu bestimmen und abhängig von dem Lösungsalgorithmus und einer Fehleranfälligkeit des Lösungsalgorithmus eine solche Konfiguration des Quantenschaltkreises zu ermitteln, die eine Anzahl von Qubits zur Fehlerkorrektur abhängig von der Fehleranfälligkeit des Lösungsalgorithmus aufweist, wobei der Quantenrechner (QC) eingerichtet ist, den Quantenschaltkreis gemäß der ermittelten Konfiguration zu konfigurieren.

8. Quantenrechner nach dem vorhergehenden Anspruch, ausgebildet zur Ausführung eines Verfahrens gemäß einem der Ansprüche 1 bis 7.

9. Verfahren oder Quantenrechner, bei welchem das Quantenrechner-Problem ein Fertigungsproblem und/oder ein Wartungsproblem und/oder ein Logistikproblem und/oder ein medizinisches Bilderkennungsproblem ist.
